# EUROPEAN PATENT SPECIFICATION

(11) **EP 0 741 631 B1**
(45) Date of publication and mention of the grant of the patent: **28.04.1999**
(21) Application number: 95906427.0
(22) Date of filing: 25.01.1995
(51) Int. Cl.: B24B 45/00, B24D 5/16

(54) **POSITIVE RADIAL LOCATION OF WHEELS ON SPINDLES**
RADIAL ARRETIERTE VORRICHTUNG FÜR SCHEIBE UND SPINDEL
PROCEDE ET DISPOSITIF DE POSITIONNEMENT RADIAL FORCE DE MEULES SUR DES BROCHES

(30) Priority: 25.01.1994 GB 9401395
(43) Date of publication of application: 13.11.1996
(60) Divisional application: 98100761.0
(73) Proprietor: Unova U.K. Limited, Aylesbury, Buckinghamshire HP20 2RQ (GB)
(72) Inventor: LAYCOCK, Michael, Keighley West Yorkshire BD20 7DH (GB)
(74) Representative: Nash, Keith Wilfrid
(86) International application number: GB9500147
(87) International publication number: WO9519870

(56) References cited:
- EP-A- 0 321 970
- DE-A- 2 936 639

## Description

### Field of invention

This invention relates to a method of and an apparatus for effecting the positive radial location of wheels on spindles, more especially the location of grinding wheels, for example diamond and cubic boron nitride (CBN) grinding wheels, on the spindle of a grinding machine.

### Background to the invention

When diamond or CBN grinding wheels are mounted on the spindle of a grinding machine, it is essential to ensure that the location of wheel on the spindle is true. This means that the attachment should positively radially locate the wheel on the spindle so that the wheel axis is coincident with the spindle axis. Ideally an order of accuracy of less than 1 micron is required.

For the purpose of obtaining a "true" mounting, it is known to centre the grinding wheel with the aid of an internally grooved sleeve, which is self-centering on the machine spindle as the wheel is tightened into position. In practice, however, an arrangement of this type is expensive and not always effective.

It is also known from EP-A-321970 to provide apparatus for mounting a wheel on a spindle comprising a flange on the spindle against which the wheel can be axially located and a ball race engageable over a portion of the spindle on the same side of the flange on the wheel. However, in this arrangement said portion of the spindle is formed as a regular polygon, so that angular rotation of the ball race relative to the spindle causes the ball race to engage with a circular aperture in the wheel, resulting in centralisation of the wheel. The production of said regular polygon can be an expensive operation, and additionally the correct rotation of the ball race may need to be accurately monitored.

It is an object of the present invention to provide an improved and a simpler method of and means for mounting a wheel such as a grinding wheel, on a machine spindle.

### Summary of the invention

According to one aspect of the invention, there is provided a method of mounting a wheel on a drive spindle as per independent claim 1.

In accordance with the method, the progressive movement of the wheel towards the flange serves to centre the wheel on the spindle axis to an accuracy determined by the identity of the diameters of the balls forming the ball race. Since these can be manufactured to a very high tolerance, the invention allows a very simple and accurate centering of the wheel on the spindle.

According to another aspect of the invention, there is provided apparatus for mounting a wheel on a spindle for effecting positive radial, centralised location thereon, as per independent claim 2.

The balls of the ball race are closely matched for diameter and roundness to provide the correct outside diameter for the ball race, such that in the fully tightened condition there is an interference fit between the wheel and the balls and the spindle. Thus, during the tightening operation, the balls roll into the positions appropriate to a true centering of the wheel on the spindle, and, together with the hardened surfaces, act to absorb interference. On completing the tightening, the trueness of the fit of the wheel is affected only by the tolerance in manufacture of the wheel and the tolerance of the ball diameter.

Repeatability and true running depends upon a consistent hardness around the inside of the wheel opening (aperture) and the associated surface of the spindle end. While in theory three equally spaced balls are sufficient to locate and centre the wheel, in practice a larger number of balls are provided around the spindle end.

Although not limited thereto, the invention specifically enables the mounting of grinding wheels, for example diamond and CBN grinding wheels, on the spindles of grinding machines.

The invention optionally lies in a grinding machine having a drive spindle for a grinding wheel and means for attaching the grinding wheel thereto as provided by the invention.

Other additional features of the invention are defined in the dependent claims.

### Brief Description of the Drawings

The invention will now be described by way of example with reference to the accompanying drawings, in which:
Figure 1 shows a first embodiment of wheel mounting in axial cross-section, divided vertically to illustrate the clamped condition in the upper half, and the unclamped condition in the lower half;
Figure 2 shows a second embodiment in axial cross-section, in the unclamped condition;
Figure 3 shows a wheel mounting not in accordance with the present invention;
Figure 4 shows a further embodiment in axial cross-section, divided as in Figure 1, to illustrate the clamped and unclamped conditions; and
Figure 5 shows an enlarged detail of a ball cage as shown in Figure 4.

### Description of Embodiments

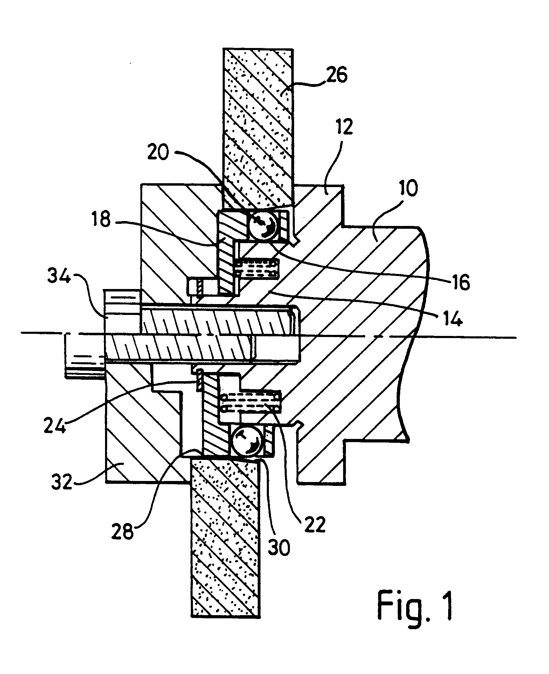

Referring to Figure 1, a grinding machine drive spindle 10 includes a radial flange 12 to provide an axial stop for a grinding wheel when fitted on the spindle, and a reduced diameter end 14 beyond the flange, for receiving the wheel. The surface 16 of the spindle end 14 is surface hardened.

Around the surface hardened spindle end 14 is fitted a ball cage 18 for retaining a plurality of balls 20 to form a ball race circularly around the spindle end 14. Typically there are 36 balls in the race and they are formed from hardened steel.

In the upper half of Figure 1, the grinding wheel 26 is shown clamped in position against the flange 12. In the lower half it is shown in the unclamped and partially demounted condition and in this condition the cage 18 is axially displaced under the action of springs 22 acting on a washer 24.

The internal surface 28 of the central aperture of the grinding wheel 26 tapers axially from an entrance 30 in one face of the wheel and is surface hardened to provide the external running surface for the ball race 20. Axially beyond the entrance region 30 the internal surface of the central aperture is cylindrical. A clamping plate 32 is forced in an axial direction by tightening centre bolt 34 so as to clamp the grinding wheel 26 between the plate 32 and the flange 12.

The action of tightening the bolt 34 also shifts the ball race and cage 18, 20 axially inwardly.

The balls 20 automatically centre the wheel on the spindle and the wheel is forced thereover, the tapered opening 30 facilitating the introduction of the wheel over the ball race and the cylindrical region of the internal aperture of the wheel producing a zero clearance, low interference fit between the balls 20 and the hardened surface 28, interference being absorbed as the wheel 26 is drawn into its final clamped position. The wheel 26 is shown clamped against the flange 12 in the upper part of the figure.

In order to achieve the desired result, the balls 20 are carefully matched as regards size, so that the outside diameter of the balls is "identical" to within a very small tolerance.

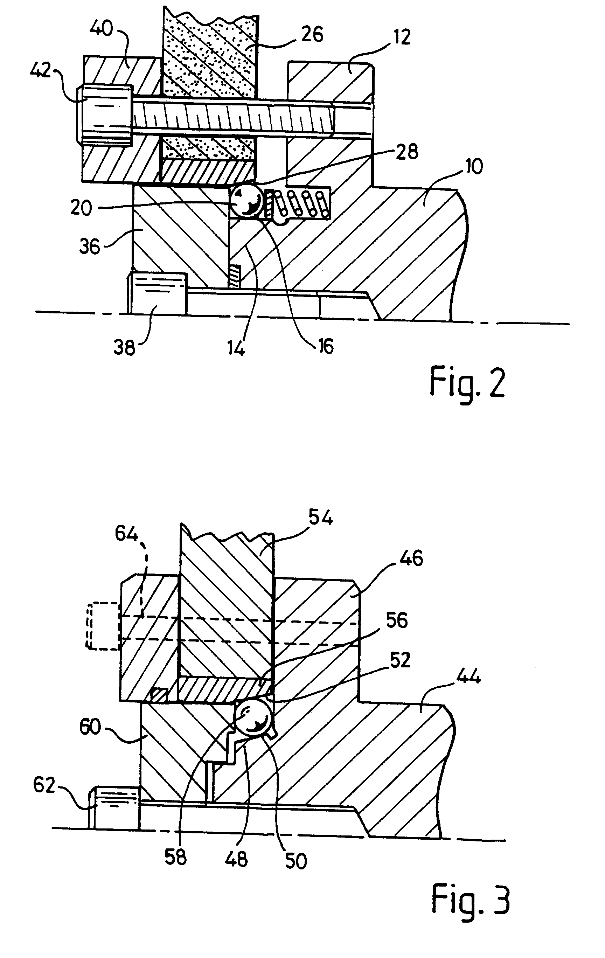

A modified arrangement is shown in Figure 2 in which similar reference numerals have been employed to indicate similar parts. Here balls 20 are retained in place by a retaining ring 36, which is secured to the spindle 10 by bolt 38. An outer ring 40 can be tightened in a similar manner to item 32, to force the balls into position, using bolts 42, there being a number of such bolts equally angularly spaced around the ring 40. The trueing effect produced during tightening is similar to that described with reference to Figure 1, and preferably the bolts 42 are tightened progressively, working around the ring.

The Figure 1 arrangement has the advantage of single point tightening.

In the Figure 3 arrangement, the balls are shown trapped between two tapering surfaces as opposed to between cylindrical surfaces as in Figures 1 and 2.

As in the first described embodiment, the arrangements of Figures 2 also require exactly matched balls, selected as to size and roundness, to provide the appropriate and correct outside diameter of the ball race to achieve the accurate centering of the wheel on the spindle.

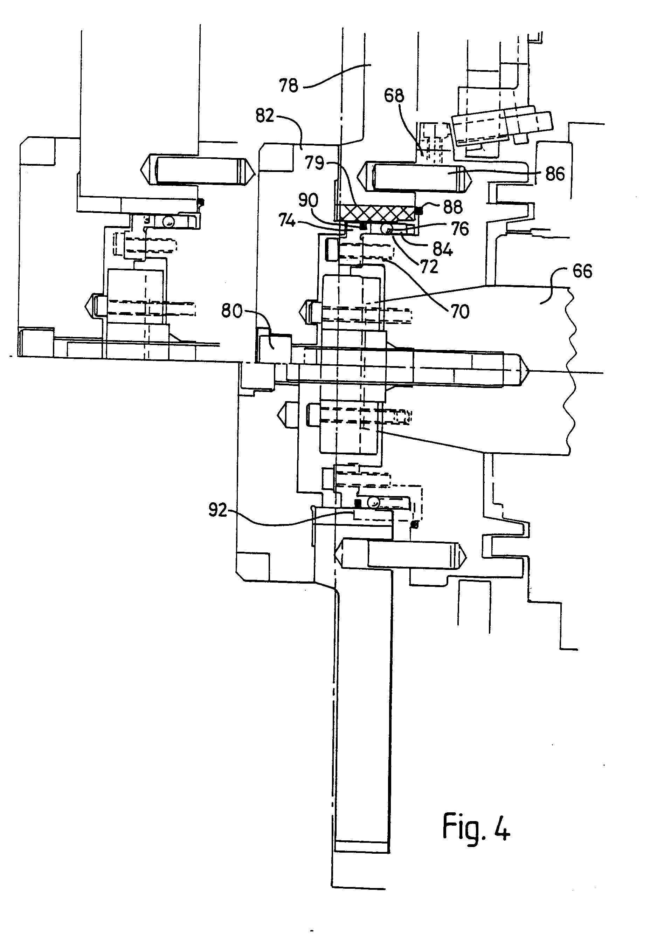

In the arrangement of Figure 4, a machine spindle 66 similarly has a flange 68 and a reduced diameter end 70 which is surface hardened to provide a very hard circumferential surface 72.

Supported on the hardened surface 72 is a ball race comprising a cage 74 containing 36 balls 76. The assembly is shown in its unclamped condition in the lower part of Figure 4 and in its clamped condition in the upper part of the figure.

The ball cage 74 retains the balls 76 in position so as to centre the grinding wheel 78. The latter is sleeved internally with a hardened ring 79 typically of hardened steel or the like.

A central bolt 80 allows plate 82 to be clamped directly onto the grinding wheel 78. As the grinding wheel 78 is shifted to the right by turning the bolt 80, the balls 76 are also forced to the right against springs such as 84. As previously described, this centres the grinding wheel 78 about the spindle 66.

Drive pins 86 extend between the wheel and the flange to transmit drive between the flange and the grinding wheel 78.

Seals 88, 90 are provided to seal the gap between the ball cage 74 and the grinding wheel 78 and any gap between the grinding wheel 78 and the flange 68. The seals 88, 90 prevent the entry of coolant and/or dirt into the space containing the balls 76. This protects the balls and extends the life of the ball race.

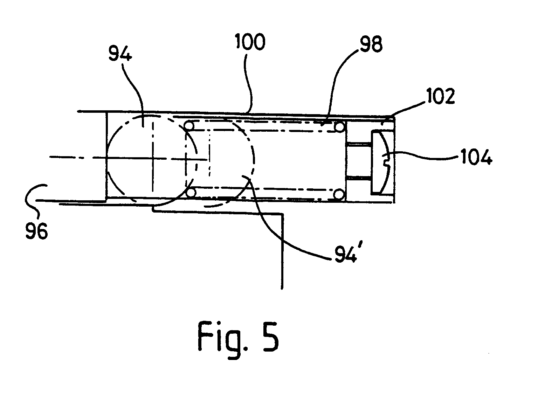

Figure 5 is an enlarged detail of the area 92 in Figure 4. Each ball 94 is moveable between its position shown by 94 and that denoted by 94'. Tightening of the bolt 80 as shown in Figure 4, causes axial movement of the ball cage 96 so as to move the balls from their unclamped condition 94 to their clamped position at 94'. Springs 98 locate the balls 94 within the slots 100 and a cylindrical end stop 102 and screw 104 serve to retain the balls and springs in their slots.

In Figure 4 the inner end of the hardened steel ring 79 may be tapered or simply formed with an enlarged diameter region as shown simply to facilitate the fitting of the ring over the ball race. The action of tightening the clamping plate 82 first of all forces the balls against their springs and then creates an interference fit as the balls are forced into the smaller diameter cylindrical region of the ring 79 to lie between the two cylindrical surfaces of the ring 79 and the spindle end.

## Claims

1. A method of mounting a wheel (26) on a drive spindle (10) so as to achieve positive radial centralised location of the wheel thereon, according to which the spindle is provided with a flange (12) adjacent a surface hardened end region (14) thereof over which a central aperture (28) of the wheel will fit, comprising the step of mounting a ball race (18) of closely matched balls (20) over the spindle near to the flange, characterised by the step of axially displacing the wheel towards the flange so as to progressively squeeze a cylindrical non-tapered region of the wheel aperture (28) over the ball race to create an all-round interference fit between the wheel and the balls and the balls and the end region of the spindle, the progressive movement of the wheel towards the flange serving to centre the wheel on the spindle (10), wherein the wheel aperture is tapered (30) so as to facilitate the fitting of the wheel to the spindle.

2. Apparatus for mounting a wheel (26) on a spindle (10) for effecting positive radial, centralised location thereon, comprising spindle with a flange (12) against which the wheel can be axially located, a ball race (18) of closely matched balls (20) around the spindle on the same side of the flange as the wheel, characterised by a tapered aperture (30) in the wheel to allow it to be pushed over the ball race, and axial drive means including a thrust plate (32) for axially displacing the wheel relative to the spindle so as to progressively squeeze a cylindrical non-tapered region of the wheel aperture over the ball race into an all-round interference fit with the spindle and into contact with the flange.

3. Apparatus according to claim 2, wherein the aperture (30) in the wheel is enlarged at the end which opens onto the face which is to contact the flange (12), to facilitate the fitting of the wheel (26) to the ball race (18), the remainder of the aperture in the wheel being of a cylindrical section (28).

4. Apparatus according to claim 2 or claim 3, wherein the thrust plate (32) serves to force the ball race (18) as well as the wheel (26) in an axial sense towards the flange (12).

5. Apparatus according to claim 2 or claim 3, wherein the drive means comprises a first thrust plate (36) to act on the ball race and a second thrust plate (40) to act on the wheel (26), the two thrust plates being independently movable to effect their respective clamping.

6. Apparatus according to any one of claims 2 to 5, wherein the aperture in the wheel tapers from an enlarged end (30) towards a cylindrical section (28).

7. Apparatus according to any one of claims 2 to 5, wherein a step is formed between the enlarged end and the cylindrical section which is to form the interference fit with the ball race, the step itself being tapered to facilitate the forcing of the balls into the cylindrical section.

8. Apparatus according to any one of claims 2 to 7, wherein the opposed faces of the wheel aperture and the spindle are surface hardened to provide resistance to wear.

9. Apparatus according to any one of claims 2 to 8, wherein the drive means includes bolt means (34) for clamping the parts together and which acts directly between a clamping plate (32) and the spindle end (14).

10. Apparatus according to any one of claims 2 to 8, wherein first bolt means (38) serves to clamp a first ring member (36) in place to retain the balls (20) in position, and a second ring member (40) and associated bolt means (42) serve to clamp the wheel (26) to the flange (10).

11. Apparatus according to any one of claims 2 to 8, wherein a first bolt means (62) serves to clamp a ball race end closure to the spindle end (48) and a second bolt means (42) serves to secure a thrust plate (40) to the spindle end which, upon being tightened towards the spindle end, engages the end face of the wheel (54) and forces the wheel axially so as to engage the ball race and finally become clamped against the flange (46).

12. Apparatus according to any one of claims 2 to 11, wherein an end clamping plate (32) is employed to clamp the wheel (26) against the flange and the interference fit between the clamping plate and the flange is sufficient to transmit drive to the wheel.

13. Apparatus according to any one of claims 2 to 11, wherein drive pins (86) extend between the wheel and the flange.

14. Apparatus according to any of claims 2 to 13, wherein the balls are retained in a cage (74) or are retained in the spindle end in axial or radial grooves with reduced width openings to prevent the balls from leaving radially.

15. Apparatus according to claim 19, wherein the balls are resiliently urged axially by springs (84) in an opposite sense to the direction in which the tightening will cause them to move.

16. Apparatus according to any one of claims 2 to 15, wherein the wheel is a grinding wheel.

17. A grinding machine having a drive spindle for a grinding wheel and means for attaching the grinding wheel thereto according to any one of claims 2 to 15.

## Patentansprüche

1. Verfahren zum Befestigen eines Rades (26) auf einer Antriebsspindel (10), um eine positive radiale, zentralisierte Lagerung des Rades auf der Spindel zu erzielen, bei dem die Spindel mit einem Flansch (12) in der Nähe eines oberflächen-gehärteten Endbereiches (14) versehen ist, über den eine zentrische Öffnung (28) des Rades im Pass-Sitz angeordnet ist, wobei ein Kugellagerlaufring (18) mit eng passenden Kugeln (20) über der Spindel in der Nähe des Flansches befestigt ist,
**dadurch gekennzeichnet**, daß das Rad gegen den Flansch axial so versetzt angeordnet ist, daß es fortschreitend einen Druck auf einen zylindrischen, nicht verjüngten Bereich der Radöffnung (28) über den Kugellagerlaufring ausübt, um einen rundum wirkenden Interferenz-Sitz zwischen dem Rad und den Kugeln sowie den Kugeln und dem Endbereich der Spindel auszuüben, wobei die fortschreitende Bewegung des Rades gegen den Flansch zum Zentrieren des Rades auf der Spindel (10) dient, und die Radöffnung verjüngt (30) ausgebildet ist, um das Aufsetzen des Rades auf die Spindel zu erleichtern.

2. Einrichtung zum Befestigen eines Rades (26) auf einer Spindel (10) zur Erzielung einer positiven, radialen, zentralisierten Lagerung, mit einer Spindel mit einem Flansch (12), gegen den das Rad in axialer Richtung positioniert werden kann, und einem Kugellagerlaufring (18) mit eng passenden Kugeln (20) um die Spindel auf der gleichen Seite des Flansches wie das Rad, gekennzeichnet durch eine verjüngte Öffnung (30) im Rad, die ermöglicht, das Rad über den Kugellagerlaufring zu drücken, und eine axiale Antriebsvorrichtung mit einer Druckplatte (32) zum axialen Verschieben des Rades relativ zur Spindel, um einen zylindrischen, nicht verjüngten Bereich der Radöffnung progressiv über den Kugellagerlaufring in einen über den gesamten Umfang wirkenden Interferenz-Sitz mit der Spindel und in Kontakt mit dem Flansch zu drücken.

3. Einrichtung nach Anspruch 2, bei der die Öffnung (30) im Rad an dem Ende vergrößert ist, das auf die in Kontakt mit dem Flansch (12) befindliche Stirnfläche öffnet, um den Sitz des Rades (26) auf dem Kugellagerlaufring (18) zu erleichtern, wobei der übrige Teil der Öffnung im Rad ein zylindrischer Abschnitt (28) ist.

4. Einrichtung nach Anspruch 2 oder 3, bei der die Druckplatte (32) dazu dient, den Kugellagerlaufring (18) wie auch das Rad (26) in axialem Sinn gegen den Flansch (12) zu drücken.

5. Einrichtung nach Anspruch 2 oder 3, bei dem die Antriebsvorrichtung eine erste Druckplatte (36), die auf den Kugellagerlaufring wirkt, und eine zweite Druckplatte (40), die auf das Rad (26) wirkt, aufweist, wobei die beiden Druckplatten voneinander unabhängig beweglich sind, um ihre entsprechende Klemmwirkung auszuführen.

6. Einrichtung nach einem der Ansprüche 2 - 5, bei der die Öffnung im Rad sich von einem vergrößerten Ende (30) gegen einen zylindrischen Abschnitt (28) verjüngt.

7. Einrichtung nach einem der Ansprüche 2 - 5, bei der eine Stufe zwischen dem vergrößerten Ende und dem zylindrischen Abschnitt ausgebildet ist, der den Interferenz-Sitz mit dem Kugellagerlaufring ausbildet, wobei die Stufe verjüngt ist, um die Kugeln in den zylindrischen Abschnitt leichter einbringen zu können.

8. Einrichtung nach einem der Ansprüche 2 - 7, bei der die gegenüberliegenden Stirnflächen der Radöffnung und die Spindel oberflächengehärtet sind, um einen hohen Abrieb-Widerstand zu erzielen.

9. Einrichtung nach einem der Ansprüche 2 - 8, bei der die Antriebsvorrichtung eine Schraubanordnung (34) aufweist, um die Teile miteinander zu verklemmen, und die Schraubanordnung direkt zwischen einer Klemmplatte (32) und dem Spindelende (14) wirkt.

10. Einrichtung nach einem der Ansprüche 2 - 8, bei der eine erste Schraubanordnung (38) vorgesehen ist, die zum Festklemmen eines ersten Ringbauteiles (36) dient, um die Kugeln (20) in ihrer Position festzulegen, und ein zweites Ringbauteil (40) und eine zugeordnete Schraubanordnung (42) zum Festklemmen des Rades (26) an dem Flansch (10) dienen.

11. Einrichtung nach einem der Ansprüche 2 - 8, bei der eine erste Schraubanordnung (62) zum Festklemmen eines Kugellagerlaufring-Endabschlusses mit dem Spindelende (48) sowie eine zweite Schraubanordnung (42) zum Festlegen einer Druckplatte (40) an dem Spindelende dient, die beim Festziehen gegen das Spindelende mit der Endfläche des Rades (54) in Eingriff steht und das Rad in axialer Richtung so beaufschlagt, daß es mit dem Kugellagerlaufring in Eingriff steht und schließlich gegen den Flansch (46) geklemmt wird.

12. Einrichtung nach einem der Ansprüche 2 - 11, bei der eine Endklemmplatte (32) verwendet wird, um das Rad (26) gegen den Flansch festzuklemmen, und die Presspassung zwischen der Klemmplatte und dem Flansch ausreichend groß ist, um einen Antrieb auf das Rad zu übertragen.

13. Einrichtung nach einem der Ansprüche 2 - 11, bei der Antriebsbolzen (86) sich zwischen dem Rad und dem Flansch erstrecken.

14. Einrichtung nach einem der Ansprüche 2 - 13, bei der die Kugeln in einem Käfig (74) aufgenommen sind oder im Spindelende oder in radialen Nuten mit Öffnungen reduzierter Breite angeordnet sind, um zu verhindern, daß die Kugeln radial ausweichen.

15. Einrichtung nach Anspruch 10, bei der die Kugeln nachgiebig in axialer Richtung durch Federn (84) in einem entgegengesetzten Sinn zu der Richtung beaufschlagt werden, in der das Festziehen ihre Bewegung bewirkt.

16. Einrichtung nach einem der Ansprüche 2 - 15, bei der das Rad ein Schleifrad ist.

17. Schleifmaschine mit einer Antriebsspindel für ein Schleifrad und eine Vorrichtung zur Befestigung des Schleifrades damit, nach einem der Ansprüche 2 - 15.

## Revendications

1. Une méthode de montage d'une meule (26) sur une broche d'entraînement (10) afin d'obtenir la position centrée radiale positive de la meule sur cette dernière, selon laquelle la broche est fournie équipée d'une bride (12) adjacente à une zone d'extrémité trempée surperficiellement (14) par-dessus laquelle une ouverture centrale (28) de la meule va se positionner, comprenant l'étape de montage d'une voie de roulement (18) à billes assorties avec précision (20) par-dessus la broche près de la bride, caractérisée par l'étape de déplacement axial de la meule vers la bride pour serrer progressivement une zone non-effilée cylindrique de l'ouverture de la meule (28) par-dessus la voie de roulement pour créer un ajustement serré sur toute la circonférence entre la meule et les billes et les billes et la zone d'extrémité de la broche, le mouvement progressif de la roue vers la bride servant à centrer la meule sur la broche (10), où l'ouverture de la meule est effilée (30) pour faciliter le montage de la meule sur la broche.

2. Un appareil pour le montage d'une meule (26) sur une broche (10) pour effectuer le positionnement centré radial positif sur cette dernière, comprenant une broche avec une bride (12) contre laquelle la meule peut être positionnée axialement, une voie de roulement (18) à billes assorties avec précision (20) autour de la broche du même côté de la bride que la meule, caractérisé par une ouverture effilée (30) dans la meule pour lui permettre d'être déplace par-dessus la voie de roulement, et un dispositif d'entraînement axial comprenant une plaque de poussée (32) pour le déplacement axial de la meule par rapport à la broche, afin de serrer progressivement une zone non effilée cylindrique de l'ouverture de la meule par-dessus la voie de roulement dans un ajustement serré sur toute la circonférence avec la broche et en contact avec la bride.

3. Un appareil conforme à la revendication 2, dans lequel l'ouverture (30) dans la meule est agrandie à l'extrémité qui s'ouvre sur la face qui va être en contact avec la bride (12), pour faciliter le montage de la meule (26) sur la voie de roulement (18), le reste de l'ouverture dans la meule étant constituée d'une section cylindrique (28).

4. Un appareil conforme à la revendication 2 ou la revendication 3, dans lequel la plaque de poussée (32) sert à forcer la voie de roulement (18) ainsi que la meule (26) dans le sens axial vers la bride (12).

5. Un appareil conforme à la revendication 2 ou la revendication 3, dans lequel le dispositif d'entraînement comprend une première plaque de poussée (36) pour agir sur la voie de roulement et une seconde plaque de poussée (40) pour agir sur la meule (26), les deux plaques de poussée pouvant être indépendamment déplacées pour effectuer leur serrage respectif.

6. Un appareil conforme à l'une des revendications 2 à 5, dans lequel l'ouverture dans la meule s'effile à partir d'une extrémité élargie (30) vers une section cylindrique (28).

7. Un appareil conforme à l'une des revendications 2 à 5, dans lequel un gradin est formé entre l'extrémité élargie et la section cylindrique qui va former l'ajustement serré avec la voie de roulement, le gradin étant effilé pour faciliter le forcement des billes dans la section cylindrique.

8. Un appareil conforme à l'une des revendications 2 à 7, dans lequel les faces opposées de l'ouverture de la meule et de la broche sont trempées superficiellement pour assurer la résistance contre l'usure.

9. Un appareil conforme à l'une des revendications 2 à 8, dans lequel le dispositif d'entraînement inclut un dispositif à boulons (34) pour le serrage des pièces ensemble et qui agit directement entre une plaque de serrage (32) et l'extrémité de la broche (14).

10. Un appareil conforme à l'une des revendications 2 à 8, dans lequel le premier dispositif à boulons (38) sert à serrer un premier élément de la bague (36) en place pour retenir les billes (20) en position, et un second élément de la bague (40) et le dispositif à boulons associé (42) sert à serrer la meule (26) sur la bride (10).

11. Un appareil conforme à l'une des revendications 2 à 8, dans lequel un premier dispositif à boulons (62) sert à serrer une fermeture de voie de roulement sur l'extrémité de la broche (48) et un second dispositif à boulons (42) sert à fixer une plaque de poussée (40) sur l'extrémité de la broche qui, étant serrée vers l'extrémité de la broche, s'engage avec la face d'extrémité de la meule (54) et force la meule axialement pour obtenir l'engagement avec la voie de roulement et, finalement, la fixation contre la bride (46).

12. Un appareil conforme à l'une des revendications 2 à 11, dans lequel une plaque de serrage d'extrémité (32) est utilisée pour serrer la meule (26) contre la bride et l'ajustement serré entre la plaque de serrage et la bride est suffisant pour transmettre T'entraînement à la meule.

13. Un appareil conforme à l'une des revendications 2 à 11, dans lequel les broches d'entraînement (86) s'étendent entre la meule et la bride.

14. Un appareil conforme à l'une des revendications 2 à 13, dans lequel les billes sont retenues dans une cage (74) ou sont retenues dans l'extrémité de la broche dans es rainures axiales ou radiales avec des ouvertures à largeur réduite pour empêcher le dégagement radial des billes.

15. Un appareil conforme à la revendication 19, dans lequel les billes sont poussées axialement par les ressorts (84) dans le sens opposé à la direction dans laquelle le serrage va causer leur déplacement.

16. Un appareil conforme à l'une des revendications 2 à 15, dans lequel le disque est une meule.

17. Une machine à rectifier équipée d'une broche d'entraînement pour une meule et d'un dispositif pour la fixation de la meule à cette dernière, conformément à l'une des revendications 2 à 15.
